# EUROPEAN PATENT APPLICATION

(11) **EP 2 014 732 A1**
(43) Date of publication of application: **14.01.2009**
(21) Application number: 07012110.8
(22) Date of filing: 21.06.2007
(51) Int. Cl.: C09D 167/00, C09D 5/03

(54) **Thermosetting polyester for dye ink sublimation**

(71) Applicant: Hexion Specialty Chemicals Research Belgium S.A., 1348 Ottignies Louvain-la-Neuve (BE)
(72) Inventor: Beccaria, Damiano Hexion Specialty Chemicals S.r.l., 12040 Sant'Albano Stura CN (IT); Capra, Andrea Hexion Specialty Chemicals S.r.l., 12040 Sant'Albano Stura CN (IT); Bejko, Imir Hexion Specialty Chemicals S.r.l., 12040 Sant'Albano Stura CN (IT); Munari, Alessandro Hexion Specialty Chemicals S.r.l., 12040 Sant'Albano Stura CN (IT); Carlevaris, Lino Natale Hexion Specialty Chemicals S.r.l., 12040 Sant'Albano Stura CN (IT)

(57) **Abstract**

The invention relates to a thermally curable powder coating composition based on carboxy functional polyester resins with a high acid value dry blended with a low acid value resin and cured with a hydroxyalkylamide, and its use in the preparation of a decorated substrate, by transfer printing.

## Description

The present invention relates to a thermally curable powder coating composition based on carboxy functional polyester resins with a high acid value dry blended with a low acid value resin and both cured with a hydroxyalkylamide, and its use in the preparation of a decorated substrate, by transfer printing. The transfer printing comprises the steps of: submitting a substrate to a treatment to prepare its surface for the application of a coating, applying a coating to the surface of the substrate in one or more cycles, covering the surface of the substrate with a sheet comprising a decoration which is to be transferred to said surface, and heating the substrate and the sheet comprising the decoration to effect the transfer of the decoration from the sheet onto the substrate.

Such a process is known from patent application EP 0 817 728, which is directed to a process and the relevant apparatus for making decorated, extruded, profiled elements.

EP 1 162 241 is about a powder coating composition comprising a mixture of resins wherein at least one resin has a hydroxy number of less than 75 mg KOH/g, at least one resin has a hydroxy number of at least 75 mg KOH/g, and a curing agent for the resins. The curing agents used are iscocyanate-fonctional products that are under environmental pressure due to their toxicological aspects.

In US 3,907,974 curable decorating systems for glass or metal containers using a heat transfer decoration are disclosed.

In WO 98/08694 a process is disclosed for decorating metal, plastic or the like materials. In this publication very little information is given on the material used to coat the surface of the substrate.

It was found that the resin used to coat the substrate before the transfer printing step is of the utmost importance to the properties and appearance of the decorated substrate.

The decorated substrate should have good mechanical properties (e.g. scratch resistance, Tg of the cured film, gloss, weathering and adhesion to the substrate), the image should be transferred completely in the transfer printing process, and the image's support (normally paper) should detach easily after transfer of the image.

The EP 1 040 171 use powder thermosetting coating compositions comprising (a) an amorphous polyester containing carboxyl groups, rich in isophthalic acid and neopentylglycol, optionally branched with a polycarboxylic acid or a polyol containing at least three functional groups; (b) a semicrystalline polyester containing carboxyl groups prepared from one or several saturated aliphatic dicarboxylic acids with linear chain, and from a saturated aliphatic diol with linear or cyclic chain optionally branched with a polycarboxylic acid or with a polyol containing at least three functional groups, and having a melting point (Tm) of at least 40 ° C and an acid value of 5 to 50 mg of KOH/g, and (c) a cross-linking agent. Said compositions are not useful for preparing varnishes providing the quality for a decorated substrate by transfer printing due to too low Tg of the cured coating, see comparative example of the present application.

The industry is still looking for a system that has no environmental issue and that could fulfill all the technical requirement for decorated substrate by transfer printing.

It was found that powder coating composition based on carboxy functional polyester resins with a high acid value dry blended with a low acid value resin and cured with a hydroxyalkylamide, solves the above problems for its use in the preparation of a decorated substrate, by transfer printing.
The system comprising at least one resin that has an acid value of 60 to 150 mg KOH/g, at least one resin that has an acid value of 10 to 55 mg KOH/g,and a curing agent for the resins.

By using this thermally curable powder coating composition, the decoration on the substrates can be very detailed and bright colours can be used without the risk of colour diffusion. The so decorated substrates are very durable and show excellent weather and outdoor resistance. Depending upon the curing temperature of the coating composition, use on heat sensitive substrates is also possible.

It was found that for an ideal transfer of the decoration from the sheet onto the coated substrate, the Tg and the hardness of the cured coating at the temperature at which the transfer of the decoration takes place are of the utmost importance. Normally, this transfer process is operated in the temperature range between 170 to 220 ° C.

If the Tg is too low, i.e. below 50 ° C, the coating will be too soft at the transfer temperature and this will camp the release of the sheet from the substrate after the transfer of the decoration, due to the softening of the coated surface.

If the Tg is too high, i.e. above 130 ° C, the coating will be too brittle, and the substrate will be damaged in normal use and, for some substrates, poor adhesion between the coating and the surface.

In view to achieve the optimum results in the heat transfer of a decoration, the coating that is cured must have a Tg between 85 and 115 ° C.

The hardness of the coating must not be too high to avoid an incomplete transfer, and not too low to cause the cramp of the transfer sheet.

The thermally curable powder coating composition according to the present invention comprises a mixture of resins wherein at least one resin has an acid number of 10 to 55 mg KOH/g and at least one other resin has an acid number of at least 60 to 150 mg KOH/g.

Further preference is given to the use of at least one resin with an acid number of 18 to 40mg KOH/g in combination with a resin with an acid number of 65 to 115 mg KOH/g.
The difference in acid value for the above resins are achieved by the use of specific acid / alcohol ratio as claimed.

Raw materials from renewable resources could also be used as source of raw materials, like sorbitol derivatives, dimer fatty acids, glycerol (derived from the production of bio-diesel), lactic acid derivatives, fructose derivatives, mannitol derivatives, furfural derivatives, pyrazol derivatives and the like. These monomers to produce the claimed resin compositions could be use alone or in combination with petrochemical based monomers.

The examples of resins below illustrate the present invention of a coating composition suitable for decorated substrate, by transfer printing.

### Examples

### Example 1

### Synthesis of 100 acid number Amorphous Polyesters

**a)** Three-stage synthesis
   - *1st stage:* A mixture of 4615 grams (44.373 moles) of neopentylglycol, 513 grams (28.5 moles) of deionized water, 409 grams (6.594 moles) of ethylene glycol, 6381 grams (38.441 moles) of terephthalic acid, 574 grams (3.458 moles) of isophthalic acid, 448 grams (2.334 moles) of trimellitic anhydride, 8.9 grams of oxalic acid as antioxidant and 8.9 grams of MBTO as esterification catalyst is introduced into a 20 liters reactor provided with a stirrer, a nitrogen inlet and a packed distillation column connected to a water cooled condenser and an electronic thermometer to control the reaction temperature. The mixture is heated, under stirring and nitrogen sparge, to 125°C where water starts to distil from the reactor, then temperature is gradually raised to 230°C and maintained until a clear polyester containing hydroxyl groups is obtained with these properties: ICI viscosity (at 200°C): 980 mPa.s, Acid Number: 11,8 mgKOH/g, Hydroxyl value: 64 mgKOH/g.
   - *2nd stage:* The polyester obtained at the first stage is cooled to 220°C, 8,9 grams of triphenylphosphite are added as antioxidant, then 1710 grams of isophthalic acid (10.301 moles) and 302 grams of trimethylolpropane (2.237moles) are charged into the reactor. Next, the mixture is gradually heated to 230°C and maintained at this temperature until becomes clear. A polyester bearing carboxyl groups is obtained with these properties: 3320 mPa.s, Acid Number: 46.1 mgKOH/g, Hydroxyl value: 39 mgKOH/g.
   - 3rd stage: The polyester obtained at the second stage is cooled to 190°C, then 1310 grams of trimellitic anhydride (20.463 moles) and 42 grams of IRGAFOS 168 (phosphite stabilizer) are added to it. Next, the mixture is maintained to 190°C until becomes clear. A polyester bearing carboxyl groups is obtained with these properties: ICI viscosity (at 200°C): 4920 mPa.s, Acid Number: 102.8 mgKOH/g, Hydroxyl value: 2.6 mgKOH/g, glass transition temperature (Tg): 69.2°C (DSC at 10°C/min), number-average molecular weight (Mn): 1795 (theoretical).
   Then the polyester is removed from the reactor.
**b)** By the way of comparison, an amorphous polyester containing carboxyl groups, rich in isophtalic acid, is also prepared according to the three-stage operating method described in a) above. It does not contain terephthalic acid, fully replaced by isophthalic acid.
   - *1st stage:* A mixture of 4615 grams (44.373 moles) of neopentylglycol, 513 grams (28.5 moles) of deionized water, 409 grams (6.594 moles) of ethylene glycol, 6955 grams (41.899 moles) of isophthalic acid, 448 grams (2.334 moles) of trimellitic anhydride, 8.9 grams of oxalic acid as antioxidant and 8.9 grams of MBTO as esterification catalyst is introduced into a 20 liters reactor provided with a stirrer, a nitrogen inlet and a packed distillation column connected to a water cooled condenser and an electronic thermometer to control the reaction temperature. The mixture is heated, under stirring and nitrogen sparge, to 125°C where water starts to distil from the reactor, then temperature is gradually raised to 225°C and maintained until a clear polyester containing hydroxyl groups is obtained with these properties: ICI viscosity (at 200°C): 500 mPa.s, Acid Number: 13.0 mgKOH/g, Hydroxyl value: 65 mgKOH/g.
   - *2nd stage:* The polyester obtained at the first stage is cooled to 210°C, 8,9 grams of triphenyphosphite are added as antioxidant, then 1710 grams of isophthalic acid (10.301 moles) and 302 grams of trimethylolpropane (2.237moles) are charged into the reactor. Next, the mixture is gradually heated to 230°C and maintained at this temperature until becomes clear. A polyester bearing carboxyl groups is obtained with these properties: ICI viscosity (at 200°C): 1640 mPa.s, Acid Number: 46.6 mgKOH/g, Hydroxyl value: 39 mgKOH/g.
   - *3rd stage:* The polyester obtained at the second stage is cooled to 195°C, then 1310 grams of trimellitic anhydride (20.463 moles) and 42 grams of IRGAFOS 168 (phosphite stabilizer) are added to it. Next, the mixture is maintained to 190°C until becomes clear. A polyester bearing carboxyl groups is obtained with these properties: 2440 mPa.s, Acid Number: 98.2 mgKOH/g, Hydroxyl value: 2.0 mgKOH/g, glass transition temperature (Tg): 67.1°C (DSC at 10°C/min), number-average molecular weight (Mn): 1795 (theoretical).

Then the polyester is removed from the reactor.

### Example 2

### Synthesis of 35 acid number Amorphous Polyesters

**a)** Two stage synthesis
   - *1st* stage: A mixture of 5927 grams (56.990 moles) of neopentylglycol, 659 grams (36.6 moles) of deionized water, 8077 grams (48.656 moles) of terephthalic acid, 519 grams (3.127 moles) of isophthalic acid, 13.35 grams of oxalic acid as antioxidant and 9.9 grams of MBTO as esterification catalyst is introduced into a 20 liters reactor provided with a stirrer, a nitrogen inlet and a packed distillation column connected to a water cooled condenser and an electronic thermometer to control the reaction temperature. The mixture is heated, under stirring and nitrogen sparge, to 125°C where water starts to distil from the reactor, then temperature is gradually raised to 235°C and maintained until a clear polyester containing hydroxyl groups is obtained with these properties: ICI viscosity (at 200°C): 820 mPa.s, Acid Number: 11.3 mgKOH/g, Hydroxyl value: 56 mgKOH/g.
   - *2nd stage:* The polyester obtained at the first stage is cooled to 210°C, 13.35 grams of triphenylphosphite are added as antioxidant, then 930 grams of isophthalic acid (5.605 moles), 457 grams of adipic acid (3.127 moles) and 39 grams of trimethylolpropane (0.287 moles) are charged into the reactor. Next, the mixture is gradually heated to 235°C and maintained at this temperature until becomes clear. A polyester bearing carboxyl groups is obtained with these properties: 1440 mPa.s, Acid Number: 45.2 mgKOH/g, Hydroxyl value: 16 mgKOH/g. Then the content of the reactor is left to cool to 225°C and placed under vacuum (residual pressure 50 mmHg) until the polyester obtained has the following characteristics: ICI viscosity (at 200°C) 3500 mPa.s, Acid number 35.7 mgKOH/g, Hydroxyl value: 6 mgKOH/g, glass transition temperature (Tg): 58.8°C (DSC; 10°C/min), number-average molecular weight (Mn): 2846 (theoretical). The polyester obtained is left to cool to 190°C and added to it are 4.1 grams of triphenylphosphite and 14 grams of MTBHQ. After stirring the mixture for 30 minutes the polyester is removed from the reactor.
b) By the way of comparison, an amorphous polyester containing carboxyl groups, rich in isophtalic acid, is also prepared according to the two-stage operating method described in a) above. It contains a minor amount of terephthalic acid and a major amount of isophthalic acid.
   - *1st stage:* A mixture of 5703 grams (54836 moles) of neopentylglycol, 634 grams (35.222 moles) of deionized water, 232 grams (1.726 moles) of trimethylolpropane, 502 grams (3.024 moles) of terephthalic acid, 8137 grams (49.018 moles) of isophthalic acid, 10.0 grams of oxalic acid as antioxidant and 10.0 grams of MBTO as esterification catalyst is introduced into a 20 liters reactor provided with a stirrer, a nitrogen inlet and a packed distillation column connected to a water cooled condenser and an electronic thermometer to control the reaction temperature. The mixture is heated, under stirring and nitrogen sparge, to 125°C where water starts to distil from the reactor, then temperature is gradually raised to 235°C and maintained until a clear polyester containing hydroxyl groups is obtained with these properties: ICI viscosity (at 200°C): 610 mPa.s, Acid Number: 11.6 mgKOH/g, Hydroxyl value: 53 mgKOH/g.
   - *2nd stage:* The polyester obtained at the first stage is cooled to 220°C, 5.0 grams of triphenylphosphite are added as antioxidant, then 1449 grams of isophthalic acid (8.729 moles) are charged into the reactor. Next, the mixture is gradually heated to 235°C and maintained at this temperature until becomes clear. A polyester bearing carboxyl groups is obtained with these properties: 1060 mPa.s, Acid Number: 47.8 mgKOH/g, Hydroxyl value: 16 mgKOH/g. Then the content of the reactor is left to cool to 230°C and placed under vacuum (residual pressure 50 mmHg) until the polyester obtained has the following characteristics: ICI viscosity (at 200°C) 3700 mPa.s, Acid number 35.7 mgKOH/g, Hydroxyl value: 3 mgKOH/g, glass transition temperature (Tg): 64.1°C (DSC; 10°C/min), number-average molecular weight (Mn): 3589 (theoretical). The polyester obtained is left to cool to 190°C and added to it are 21.43 grams of Irganox B225.
After stirring the mixture for 30 minutes the polyester is removed from the reactor.

**Comparative example 3**, a semicrystalline polyester containing carboxyl groups according to the example 2a of EP 1 040 171 is prepared:
a mixture of 739.9 grams (3.21 moles) of 1,12-dodecandioic acid, 369.2 grams (3.12 moles) of 1,6-exanediol and 2,5 parts of n-butyltin trioctanoate as esterification catalyst are charged into a 2 liters four-necked round-bottomed flask equipped with a stirrer, a nitrogen inlet and a packed distillation column connected to a water cooled condenser and an electronic thermometer to control the reaction temperature. The mixture is heated, under stirring and nitrogen sparge, to 140°C where water starts to distil from the reactor, then temperature is gradually raised to 225°C and maintained until the distillation of the water at atmospheric pressure is completed. Next 1.0 gram of tributylphosphite as stabilizer and 1.0 gram of n-butyltin trioctanoate as esterification catalyst are added to the resin and placed under vacuum (residual pressure 50 mmHg) at 225°C until the polyester obtained has the following characteristics: : ICI viscosity (at 150°C) 5300 mPa.s, Acid number 12.9 mgKOH/g, Hydroxyl value: 1.0 mgKOH/g, melting point (Tm): 70.5°C (DSC; 20°C/min), number-average molecular weight (Mn): 10570 (theoretical). The polyester obtained is left to cool to 160°C and added to it are 10.0 grams of Tinuvin 144 and 10.0 grams of Tinuvin 900. After stirring the mixture for 1 hour the polyester is removed from the reactor.

**Example 1a:** is the 100 acid number amorphous polyester resin.
**Example 1b:** is the modification of 1b by replacement of TPA with IPA as resin with better weatherability.
**Example 2a**: is the 35 acid number amorphous polyester.
**Example 2b**: is the 35 acid number amorphous polyester rich in isophthalic (95/5 IPA/TPA).
**Comparative Example 3**: is the semi-crystalline polyester (patent EP 1 040 171, example 2a) prepared to evaluate, co-extruded with example 1b.

### Preparation of Thermosetting Powder Coating Compositions

The combination is Example 1a / Example 2a.

A brown colored coating is prepared with each one of the above mentioned resins. The formulations are as following:

| | | |
|---|---|---|
| Example 1a | 835,8 | - |
| Example 2a | - | 912,8 |
| Primid XL552 | 125 | 48 |
| Resiflow PV 88 | 10 | 10 |
| Benzoin | 3 | 3 |
| Bayferrox 420 Yellow | 23 | 23 |
| Bayferrox 130M Red | 1 | 1 |
| Bayferrox 306 T Black | 2,2 | 2,2 |
| | | |
| Total Weight | 1000 | 1000 |
| Polyester / Crosslinker | 87/13 | 95/5 |
| Pigment / Binder | 2,5 / 97,52,5 | / 97,5 |

After hand shaking each of premixes is extruded in a double screw APV MP-30 extruder. The set temperatures for the three heating zones are: 20/80/90°C. After extrusion the preparations are cooled, chipped and grinded. The powder is sieved in a 106µ sieve. After sieving the two coatings are dry blended thoroughly in a 50/50 ratio and electrostatically sprayed on cold rolled steel panels.

The powder coated panel is baked into an air circulated oven at 200°C for 15 minutes. After baking the gloss of this coating, measured at an angel of 60° is 20 %. The appearance is good.

### Comparative based on example 3

To verify the eventual suitability of the EP 1 040 171 patent for ink sublimation combination resin of Example 1b and resin of Example 3 cured with Primid XL 552 was done.

| | A | B |
|---|---|---|
| Example 1b | 634 | 442 |
| Example 3 | 211,6 | 442 |
| Primid XL 552 | 115,2 | 76,8 |
| Resiflow PV 88 | 10 | 10 |
| Benzoin | 3 | 3 |
| Bayferrox 420 Yellow | 23 | 23 |
| Bayferrox 130M Red | 1 | 1 |
| Bayferrox 306 T Black | 2,2 | 2,2 |
| | | |
| Total Weight | 1000 | 1000 |
| Polyester / Crosslinker | 88/12 | 92/8 |
| Pigment / Binder | 2,5 / 97,5 | 2,5 / 97,5 |

Two coatings are prepared with A and B formulations using the same method of powder coating preparation as described above. In the A formulation a 75/25 ratio between standard/semi-crystaline is used, as indicated in the EP 1 040 171 patent. This formulation gave a gloss of 52 % (at an angle of 60°) which is very high compared to a range of approx. 15-25 gloss, as the desired range for the dye ink sublimation process. This is why a B formulation, with a 50% of semi-crystalline ratio was tested. This formulation gave a gloss of 19 (at an angle of 60°), the appearance was not good.

This formulation resulted completely unsuitable for the dye ink sublimation process. The entire panel got stick into the hot plate and after the paper detachment the wood image was distorted.

The dye ink process, simply described is as following: the suitable paper, bearing the image is pressed between the coated panel and a hot metal plate at approx. 200°C. The processing time is indicatively 1 minute. After this the process is interrupted and a good performance of the coating means an easy detachment of the paper from the coating substrate and a very good appearance of the transferred image.

## Claims

1. A thermally curable powder coating composition comprising a dry blended of powder based on a carboxy functional polyester resin with a high acid value and a carboxy functional polyester resin with a low acid value and both cured with a hydroxyalkylamide.

2. The coating composition of claim 1 **characterized in that** the high acid value polyester resin is prepared from an acid constituent comprising from 20 to 100% moles of terephthalic acid, from 0 to 45% moles of at least one dicarboxylic acid or anhydryde other than terephthalic acid,from 0 to 45% moles of polycarboxylic acid or anhydride containing at least three carboxyl groups,
and from an alcohol constituent comprising from 60 to 100% moles of neopentylglycol, from 0 to 40% moles of at least one dihydroxylated compound other than neopentylglycol glycol and from 0 to 20% moles of polyhydroxylated compound containing at least 3 hydroxyl groups, the said amorphous polyester having a glass transition (Tg) of at least 50°C, and an acid number of 60 to 150 mgKOH/g, and preferably 65 to 115 mgKOH/g.

3. The coating composition of claim 1 **characterized in that** the low acid value polyester resin is prepared from an acid constituent comprising from 20 to 100% moles of terephthalic acid, from 0 to 45% moles of at least one dicarboxylic acid or anhydryde other than terephthalic acid, from 0 to 10% moles of polycarboxylic acid or anhydryde containing at least three carboxyl groups, and from an alcohol constituent comprising from 60 to 100% moles of neopentylglycol, from 0 to 40% moles of at least one dihydroxylated compound other than neopentylglycol glycol, from 0 to 10% moles of polyhydroxylated compound containing at least 3 hydroxyl groups, the said amorphous polyester having a glass transition (Tg) of at least 50°C, and an acid number of 10 to 55 mgKOH/g, and preferably 18 to 40 mgKOH/g.

4. The coating composition of claim 1 **characterized in that** the high acid value polyester resin is prepared from an acid constituent comprising from 20 to 100% moles of isophthalic acid, from 0 to 45% moles of at least one dicarboxylic acid or anhydryde other than isophthalic acid, from 0 to 45% moles of polycarboxylic acid or anhydride containing at least three carboxyl groups,
and from an alcohol constituent comprising from 60 to 100% moles of neopentylglycol, from 0 to 40% moles of at least one dihydroxylated compound other than neopentylglycol glycol, from 0 to 20% moles of polyhydroxylated compound containing at least 3 hydroxyl groups, the said amorphous polyester having a glass transition (Tg) of at least 50°C, and an acid number of 60 to 150 mgKOH/g, and preferably 65 to 115 mgKOH/g.

5. The coating composition of claim 1 **characterized in that** the low acid value polyester resin is prepared from an acid constituent comprising from 0 to 100% moles of isophthalic acid, from 0 to 45% moles of at least one dicarboxylic acid or anhydryde other than isophthalic acid, from 0 to 10% moles of polycarboxylic acid or anhydryde containing at least three carboxyl groups,
and from an alcohol constituent comprising from 60 to 100% moles of neopentylglycol, from 0 to 40% moles of at least one dihydroxylated compound other than neopentylglycol glycol, from 0 to 10% moles of polyhydroxylated compound containing at least 3 hydroxyl groups, the said amorphous polyester having a glass transition (Tg) of at least 50°C, and an acid number of 10 to 55 mgKOH/g, and preferably 18 to 40 mgKOH/g.

6. The coating composition according to any one of the preceding claims **characterized in that** the cured coating has a Tg between 85 and 115°C.

7. The use of a coating according to claims 1 to 5 in the preparation of a decorated substrate, by dye ink sublimation technology.
